# EUROPEAN PATENT APPLICATION

(11) **EP 2 770 797 A1**
(43) Date of publication of application: **27.08.2014**
(21) Application number: 14168827.5
(22) Date of filing: 19.03.2010
(51) Int. Cl.: H04W 76/02, H04L 29/06, H04W 12/02, H04W 84/10

(54) **Mobile communication system, method and device for connecting a mobile terminal to the Internet**

(30) Priority: 19.03.2009 JP 2009068727; 03.07.2009 JP 2009159214
(62) Divisional of application: 10753317.6
(71) Applicant: NEC Corporation, Minato-ku, Tokyo 108-8001 (JP)
(72) Inventor: Takano, Yusuke, Minato-ku,, Tokyo 108-8001 (JP); Tamura, Toshiyuki, Minato-ku,, Tokyo 108-8001 (JP)
(74) Representative: Glawe, Delfs, Moll

(57) **Abstract**

A mobile communication network includes a radio communication device for connecting a mobile terminal to the Internet without passing through the carrier network. The device comprises: a gateway and a Home eNode B. A Mobility Management Entity, MME, carries out an authentication process in response to a connection request from the mobile terminal. A secure tunnel is established between the device and a security gateway.

## Description

### TECHNICAL FIELD

The present invention relates to radio communication devices for mobile communication systems, and in particular to radio communication devices adopting Home Node B.

The present application claims priorities on Japanese Patent Application No. 2009-68727 (filed March 19, 2009), and Japanese Patent Application No. 2009-159214 (filed July 3, 2009), the entire contents of which are incorporated herein by reference.

### BACKGROUND ART

Recently, technologies allowing for utilization of Web services provided on the Internet have been standardized to provide services with mobile terminals. To provide these services, cellular phone companies need to handle a large amount of traffic. Cellular phone companies need to expand their facilities regarding carrier networks in response to increasing traffic. On the other hand, since a fixed-rate charge model has been generally adopted, cellular phone companies have undergone difficulties with charging users in response to the amounts of traffic. Under these circumstances, it is desirable that cellular phone companies be able to transmit large amounts of traffic at low cost.

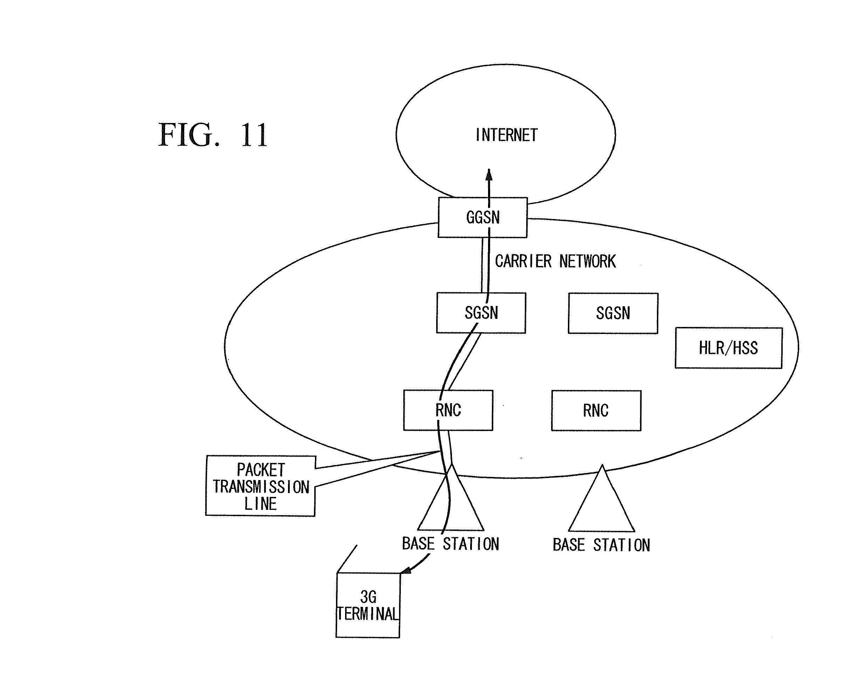

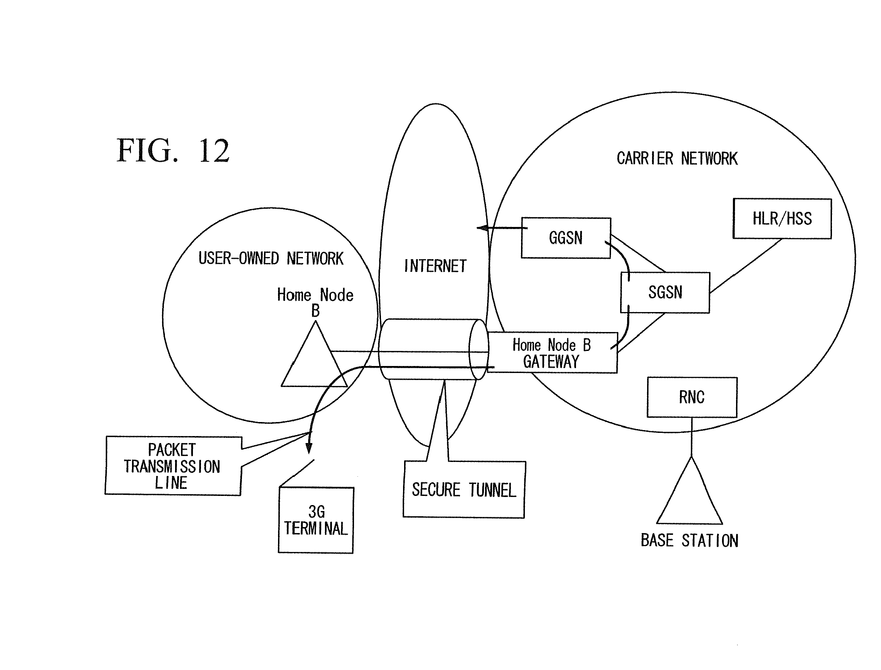

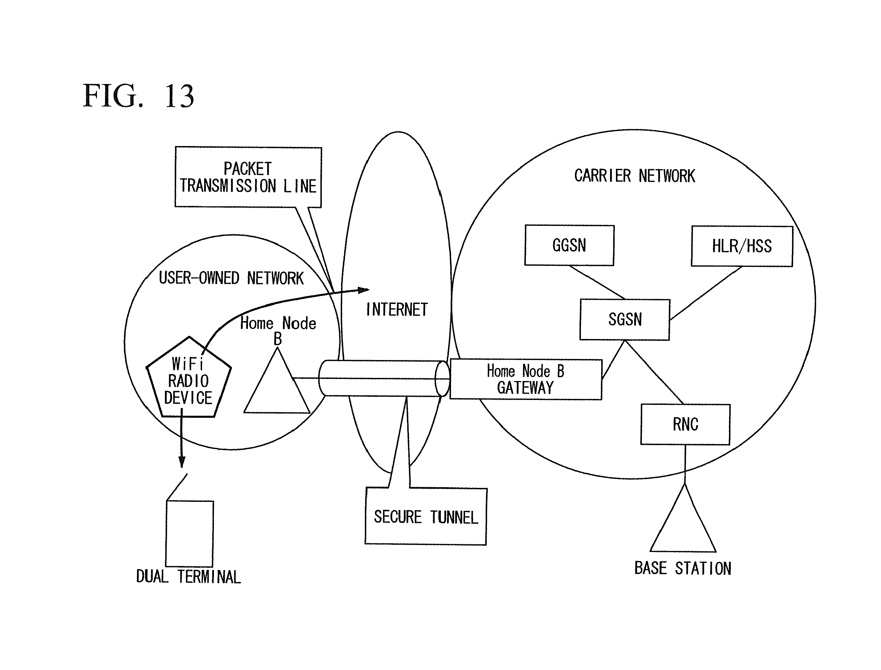

Fig. 11 shows a commonly-known configuration of a mobile communication network. A user's mobile terminal is connected to the Internet via a carrier network, see lines with arrows. A cellular phone company may provide a service, as shown in Fig. 12, in which each mobile terminal is connected to networks via Home Node B installed in a user-owned network. In this mobile communication system, a user's mobile terminal is connected to the Internet via a carrier network, see lines with arrows. Fig. 13 shows a configuration of a mobile communication system including a dual terminal, which is able to handle plural radio techniques and operate at an access point of another radio technique installed in a user-owned network.

### PRIOR ART DOCUMENT

### PATENT DOCUMENT

Patent Document 1: Republication WO03-107611

### SUMMARY OF THE INVENTION

### PROBLEM TO BE SOLVED BY THE INVENTION

From a user's point of view, a mobile communication system, adopting Home Node B installed in a user-owned network, is unsatisfactory because a carrier network is deliberately interposed in a communication link with the Internet. From a carrier's point of view, when a user does not apply for a usage-based charging system, the amount of traffic passing through a carrier network imposing no direct charge may increase in response to increasing usage of a user's communication, which in turn increases facility and operation costs of the carrier network. From a user's point of view, a plurality of radio devices needs to be installed in the mobile communication system utilizing a dual terminal, wherein when a user's mobile terminal moves out of the area of each radio device installed by the user, the user may undergo communication breakdown, which causes a problem in terms of convenience for the user.

The present invention is made under these circumstances, wherein the object thereof is to provide a radio communication device for a mobile communication system which ensures direction connection to the Internet from a user-owned network such as a femto-cell and which enables a handover to be implemented when a mobile terminal moves out of the user-owned network.

### MEANS TO SOLVE THE PROBLEM

The present invention is directed to a mobile communication system which is able to connect a mobile terminal to the Internet via a mobile communication network, and which includes a radio control unit, installed in the mobile communication network, for communicating with a mobile terminal, a gateway for relaying a mobile terminal's communication from the radio control unit to the Internet, and a node for carrying out an authentication process in response to a connection request from the mobile terminal. Herein, the node establishes a direct tunnel between the gateway and the radio control unit so that the mobile terminal is connected to the Internet via the direct tunnel.

The present invention is directed to a radio communication device which is able to connect a mobile terminal to the Internet via a mobile communication network and which includes a radio control unit for communicating with a mobile terminal by radio, and a gateway for relaying a mobile terminal's communication to the Internet. Herein, a direct tunnel is established between the radio control unit and the gateway, so that the mobile terminal is connected to the Internet via the direct tunnel.

The present invention is directed to a radio communication method applied to a mobile communication system including a radio control unit for communicating with a mobile terminal by radio, a gateway for relaying a mobile terminal's communication to the Internet via the radio control unit, and a node for carrying out an authentication process in response to a connection request from the mobile terminal. Herein, a direct tunnel is established between the radio control unit and the gateway, so that the mobile terminal is connected to the Internet via the direct tunnel.

The present invention is directed to a radio communication method applied to a radio communication device including a radio control unit for communicating with a mobile terminal by radio, and a gateway for relaying a mobile terminal's communication to the Internet via the radio control unit. A direct tunnel is established between the radio control unit and the gateway, so that the mobile terminal is connected to the Internet via the direct tunnel and the mobile communication network.

### EFFECT OF THE INVENTION

The present invention is able to establish connection from a mobile terminal to the Internet without passing through a carrier network since a direct tunnel is established between the radio control unit and the gateway.

As a result, it is possible to reduce the amount of traffic passing through the carrier network, and it is possible to reduce operation costs as well.

### BRIEF DESCRIPTION OF THE DRAWINGS

[Fig. 1] A schematic illustration used for explaining the outline operation of a mobile communication system and a radio communication device according to Embodiment 1 of the present invention.
[Fig. 2] A block diagram showing the constitution of the radio communication device according to Embodiment 1.
[Fig. 3] A schematic diagram showing an authentication process and a secure tunnel establishment process in the radio communication device for the mobile communication system according to Embodiment 1.
[Fig. 4] A schematic diagram showing a connection process of a 3G terminal in the mobile communication system of Embodiment 1.
[Fig. 5] A schematic diagram showing a handover process from a user-owned network of a 3G terminal to a public network in the mobile communication system of Embodiment 1.
[Fig. 6] A schematic illustration used for explaining the outline operation of a mobile communication system and a radio communication device according to Embodiment 2 of the present invention.
[Fig. 7] A block diagram showing the constitution of the radio communication device according to Embodiment 2.
[Fig. 8] A schematic diagram showing an authentication process and a secure tunnel establishment process in the radio communication device for the mobile communication system according to Embodiment 2.
[Fig. 9] A schematic diagram showing a connection process of an LET terminal in the mobile communication system of Embodiment 2.
[Fig. 10] A schematic diagram showing a handover process from a user-owned network of an LET terminal to a public network in the mobile communication system of Embodiment 2.
[Fig. 11] A schematic illustration showing the configuration of a commonly-known mobile communication network.
[Fig. 12] A schematic illustration of a mobile communication system adopting Home Node B installed in a user-owned network.
[Fig. 13] A schematic illustration of a mobile communication system that allows a dual terminal to establish a direct connection from a user-owned network to the Internet.

### MODE FOR CARRYING OUT THE INVENTION

A radio communication device for a mobile communication system according to the present invention will be described in detail with reference to the accompanying drawings.

### EMBODIMENT 1

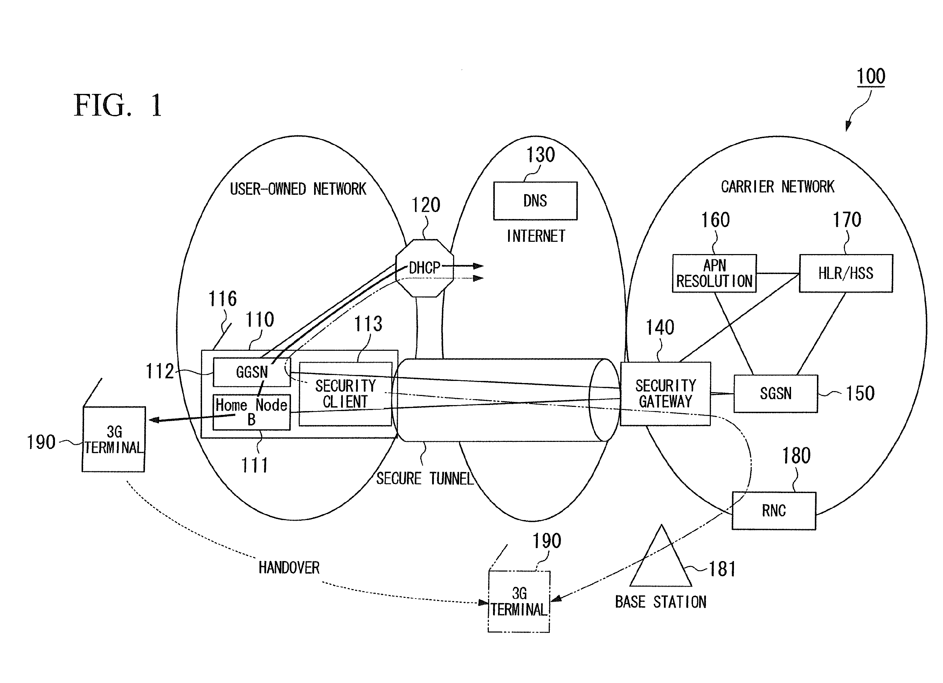

Fig. 1 shows the constitution and the outline operation with respect to a mobile communication system 100 and a radio communication device 110 according to Embodiment 1 of the present invention.

The mobile communication system is designed to connect a 3G (3rd Generation) terminal 190 to the Internet via a user-owned network. The user-owned network is an example of a mobile communication network, which is called a user network or a home network. The 3G terminal 190 is an example of a mobile terminal. The mobile communication system 100 includes a radio communication device 110, DHCP (Dynamic Host Configuration Protocol) 120, a DSN (Domain Name System) 130, a security gateway 140, an SGSN (Serving GPRS Support Node, where GPRS: General Packet Radio Service) 150, an APN (Access Point Name) resolution unit 160, an HLR/HSS (Home Location Register/Home Subscriber Server) 170, an RNC (Radio Network Controller) 180, and a plurality of base stations 181.

A plurality of 3G terminals 190 is connected to the mobile communication system 100 via the radio control device 110 or via a plurality of base stations 181. The 3G terminal 190 is connected to the Internet, which is a communication destination, via the radio control device 110. The radio communication device 110 according to Embodiment 1 carries out a gateway process.

The radio communication device 110, which is installed in the user-owned network, carries out path control on the 3G terminal 190. The radio communication device 110 is connected to the security gateway 140, installed in the carrier network, via a secure tunnel which is established via the Internet. The radio communication device 110 is connected to the DHCP 120 via a LAN (Local Area Network) or the like. The DHCP 120 is positioned at the boundary between the user-owned network and the Internet, wherein the DHCP 120 implements a function of assigning an IP address to the 3G terminal 190 in the user-owned network. For instance, the DHCP 120, which is installed in the user-owned network, is configured of an optical connection router adopted in a home-use optical network service. The SGSN 150, which is installed in the carrier network, carries out an authentication and keeps track of the location of the 3G terminal 190. Owing to the adoption of the direct tunnel technology, the SGSN 150 does not need to handle user traffic. The HLR/HSS 170 is a subscriber managing device for managing user's subscriber information and positional information of the 3G terminal 190.

The APN resolution unit 160, which is installed in the carrier network, carries out an APN resolution to specify a GGSN (Gateway GPRS Support Node) 112 of the radio communication device 110. The security gateway 140, which is connected to the radio communication device 110 via the secure tunnel, implements a function of authenticating the radio communication device 110 and a function of transmitting network setting information to the radio communication device 110. The security gateway 140 is installed in the carrier network. The secure tunnel is called a security tunnel. The RCN 180 is a radio control station. The base station 181 conducts radio communication with the 3G terminal 190.

Owing to the adoption of direct tunnel technology, the 3G terminal 190 is connected to the Internet via a path denoted by solid arrows in Fig. 1. In a carrier's view, it is possible to suppress traffic because a packet communication path of the 3G terminal 190 passes through the user-owned network alone. In a user's view, it is unnecessary to prepare a specific-use radio device or a dual terminal. Additionally, owing to the adoption of the same radio communication path, it is possible to maintain communication even when the 3G terminal 190 moves out of the area of the radio communication device 110, installed in the user-owned network; this making it more convenient for the user.

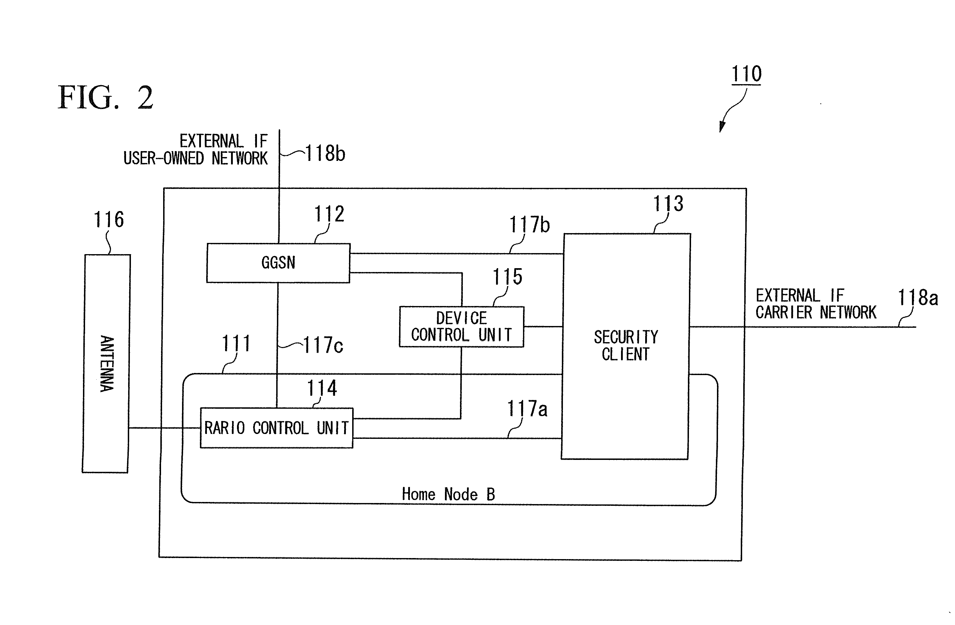

Fig. 2 is a block diagram showing the constitution of the radio communication device 110 according to Embodiment 1.

The radio communication device 110 includes a Home Node B 111, a GGSN 112, a security client 113, a radio control unit 114, a device control unit 115, and an antenna 116.

The GGSN 112 provides an interface to the security client 113, an interface to the user-owned network, and an interface to the radio control unit 114. The radio control unit 114 is a controller (having the same function as the RNC) that controls a radio network, which provides an interface to the security client 113, and an interface to the GGSN 112. The security client 113 puts together interfaces to the GGSN 112 and the radio control unit 114 and provides an interface to the carrier network, establishing a connection from the user-owned network to the carrier network via the secure tunnel in the Internet. The device control unit 115 is a controller that controls the GGSN 112, the security client 113, and the radio control unit 114, wherein the device control unit 115 stores setting parameters necessary for their operations. Herein, the interface of the security client 113 and the interface of the radio control unit 114 are mutually connected (see 117a). The interface of the GGSN 112 and the interface of the security client 113 are mutually connected (see 117b). Additionally, the interface of the GGSN 112 and the interface of the radio control unit 114 are mutually connected (see 117c). When the 3G terminal 190 is connected to the Internet, a direct tunnel is established along the connection 117c between the GGSN 112 and the radio control unit 114.

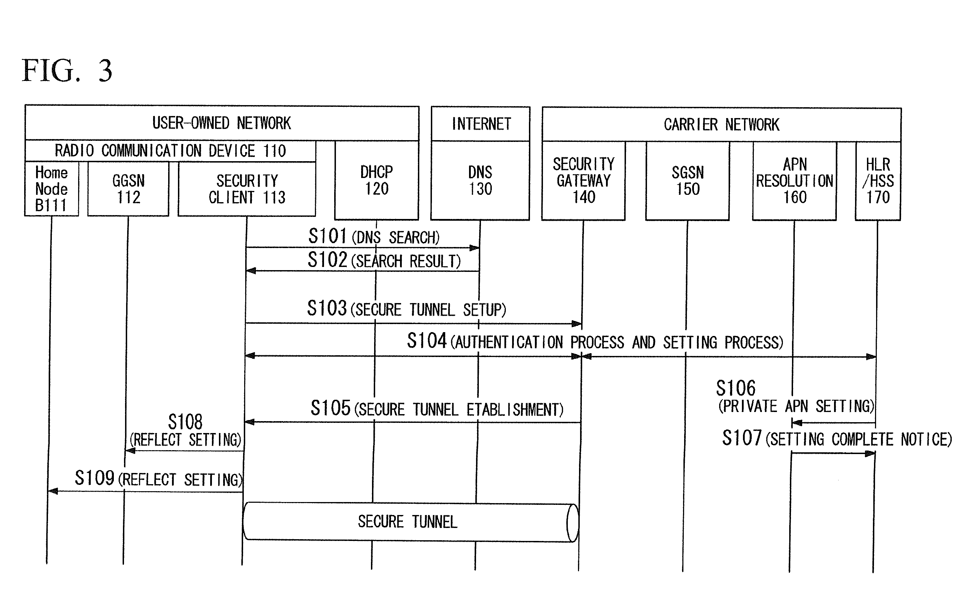

Fig. 3 shows an authentication process and a secure tunnel establishment process of the radio communication device 110 in the mobile communication system 100 of Embodiment 1.

First, the security client 113 searches for the security gateway 140 with the DSN 130 in order to establish a connection between the user-owned network and the carrier network (steps S101, S102). Herein, the radio communication device 110 stores a domain name of the security gateway 140 in memory (not shown). The security client 113 of the radio communication device 110 inquires the DSN 130, installed in the Internet, about an IP address corresponding to the domain name of the security gateway 140. The DSN 130 is equipped with a correspondence table between domain names and IP addresses, so that the DSN 130 reads the IP address corresponding to the domain name, inquired by the security client 113, from the correspondence table. The DSN 130 transmits the read IP address to the radio communication device 110. The security client 113 of the radio communication device 110 receives the IP address transmitted from the DSP 130. The security client 113 starts the secure tunnel establishment process in accordance with an IKEv2 (Internet Key Exchange version 2) protocol (step S103).

Thereafter, the security client 113 cooperates with the HLR/HSS 170 to carry out the authentication process based on the IKEv2 protocol (step S104). Specifically, the security client 113 notifies the HLR/HSS 170 of identification information of the radio communication device 110. After completion of authentication, the HLR/HSS 170 notifies the security client 13 of setting information of a radio gateway. Upon receiving an authentication completion, the security gateway 140 notifies the security client 113 of a secure tunnel establishment completion (step S105).

Based on the identification information notified from the security client 113, the HLR/HSS 170 specifies the user-owned network, equipped with the radio communication device 110, and sets a specific APN to the APN resolution unit 160 to establish a correlation between the IP address and APN information to the user-owned network (steps S106, S107). For instance, the APN information has a format such as HOME<IMSI>. Herein, <IMSI> is a subscriber identifier, which is expressed using fifteen numerals.

The device control unit 115 makes the setting information, which the security client 113 is notified by the HLR/HSS 170, reflect setting of the GGSN 112 and the Home Node B 111 (steps S108, S109). This setting information may include location information, APN, SGSN address, or the like. Thus, a secure tunnel is established.

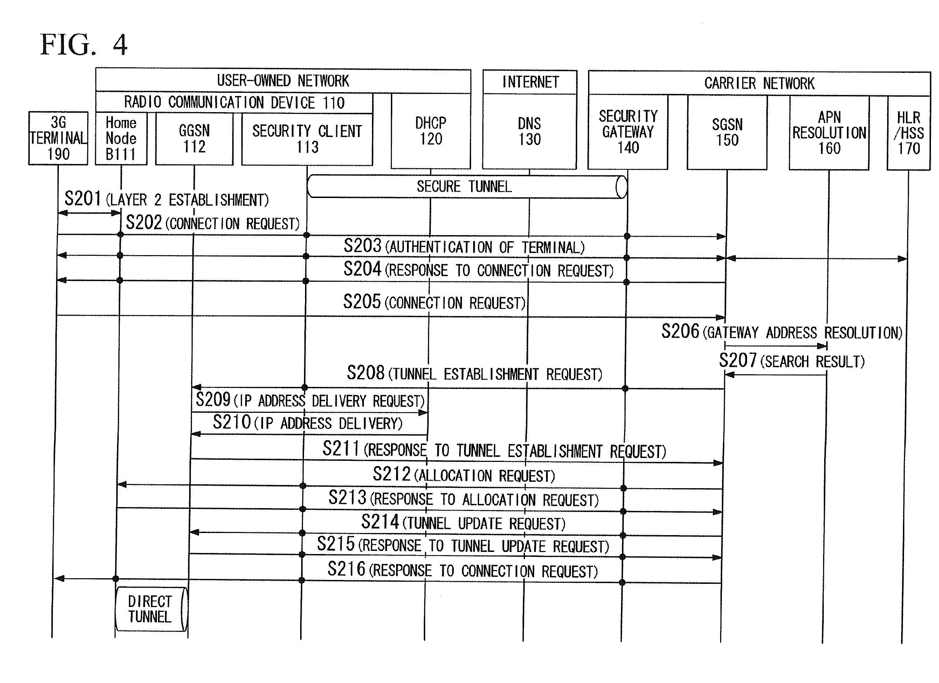

Fig. 4 shows a connection process of the 3G terminal 190 in the mobile communication system of Embodiment 1.

First, the 3G terminal 190 establishes a radio link (Layer 2) with the radio control unit 114 of the radio communication device 110 (step S201). The 3G terminal 190 notifies the SGSN 150 of a connection request with the carrier network (step S202). Upon receiving the connection request, connected to the carrier network, transmitted from the 3G terminal 190, the SGSN 150 carries out the authentication process on the 3G terminal 190 (step S203). Subsequently, the SGSN 150 responds to the connection request (step S204). To start packet communication, the 3G terminal 190 notifies the SGSN 150 of the connection request (step S205). For instance, the 3G terminal 190 notifies "Home*", using a wild card, as anAPN used for connection with the user-owned network.

The SGSN 150 has a rule for converting Home*, used for APN resolution, into Home<IMSI> in advance, so that the SGSN 150 searches for a gateway corresponding to Home<IMSI> (step S206). The APN resolution unit 160 notifies the SGSN 150 of an IP address of the gateway corresponding to Home<IMSI> (step S207). The SGSN 150 notifies the GGSN 112 of the radio communication device 110 of a tunnel establishment request toward the APN-resolved gateway (step S208). At this time, the SGSN 150 notifies the GGSN 112 of the IP address of the Home Node B 111 as a tunnel termination point, thus accelerating establishment of a direct tunnel.

The GGSN 112 requests that the DHCP 120 of the user-owned network deliver an IP address, utilized by the 3G terminal 190, for the purpose of tunnel establishment (step S209). Subsequently, the DHCP 120 delivers an IP address (step S210). Upon completion of the foregoing setting, the GGSN 112 notifies the SGSN 150 of a response to the tunnel establishment request (step S211). Next, the SGSN 150 of the carrier network makes an allocation request with respect to the Home Node B 111 of the radio communication device 110 (step S212). Subsequently, the Home Node B 111 sends back a response to the allocation request to the SGSN 150 (step S213).

Next, the SGSN 150 of the carrier network sends a tunnel update request to the GGSN 112 of the radio communication device 110 (step S214). Subsequently, the GGSN 112 sends back a response to the tunnel update request to the SGSN 150 (step S215). The SGSN 150 notifies the 3G terminal 190 of completion of tunnel setting (i.e. a response to the connection request) (step S216). Thus, a direct tunnel is established, so that the 3G terminal 190 starts communication.

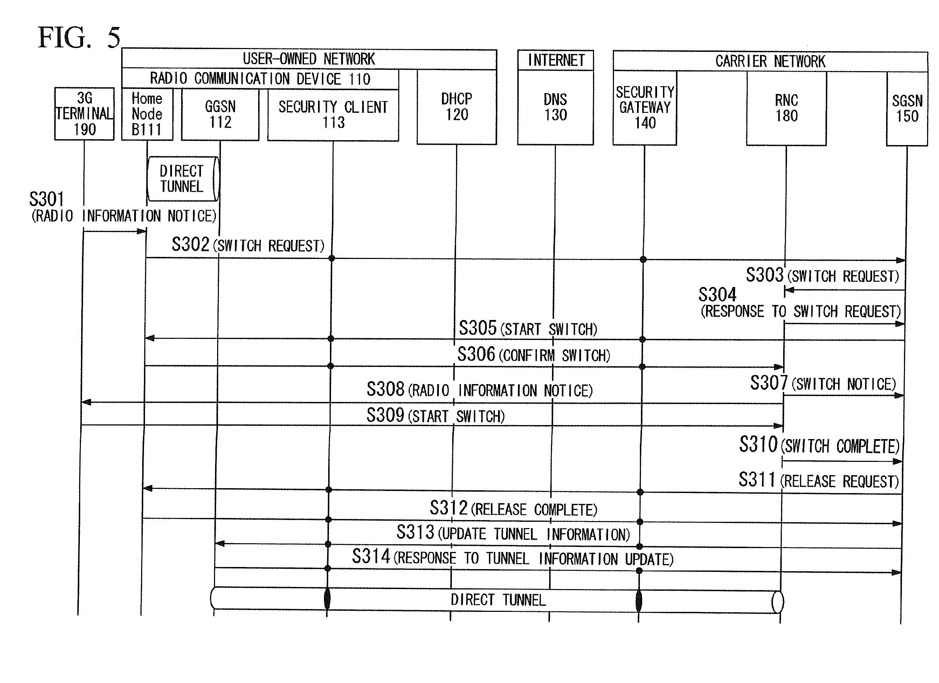

Fig. 5 shows a handover process from the user-owned network of the 3G terminal 190 to the public network in the mobile communication system of Embodiment 1. The handover process is implemented on the precondition that a direct tunnel has already been established between the Home Node B 111 and the GGSN 112.

First, the 3G terminal 190 sends radio information to the Home Node B 111 of the radio communication device 110 (step S301). Subsequently, the Home Node B 111 makes a decision whether to switch a radio link, thus sending a switch request to the SGSN 150 of the carrier network (step S302). The SGSN 150 forwards the switch request to the RNC 180, which is a communication destination (step S303). The RNC 180 makes a response to the switch request (step S304). Upon completion of preparation in the communication destination, the SGSN 150 sends a switch start command to the Home Node B 111 (step S305). Upon receiving the switch start command, the radio control unit 114 sends back a switch confirmation to the RNC 180, which is a communication destination (step S306).

Upon receiving the switch confirmation, the RNC 180 notifies the SGSN 150 that a radio link is switched (step S307). Additionally, the RNC 180 sends radio information to the 3G terminal 190 (step S308). Upon receiving the radio information from the RNC 180, i.e. the communication destination, the 3G terminal 190 starts to switch a radio link (step S309). Upon establishing a radio link with the 3G terminal 190, the RNC 180 sends a switch completion to the SGSN 150 (step S310).

Upon completion of switching a radio link, the SGSN 150 requests the Home Node B 111 to release radio resources (step S311). Subsequently, the Home Node B 111 releases radio resources and then sends a release completion to the SGSN 150 (step S312). The SGSN 150 sends identification information of the RNC 180, i.e. the communication destination, to the GGSN 112, thus sending a tunnel information update communication, owing to a switch of a direct tunnel, to the GGSN 112 (step S313). Upon receiving the tunnel information update communication, the GGSN 112 updates tunnel information (step S314). This completes a switch of a radio link, thus establishing a direct tunnel between the GGSN 112 and the RNC 180.

As described above, when the 3G terminal 190 of the user-owned network is connected to the Internet in the mobile communication system 100 of Embodiment 1, the 3G terminal 190 allows its traffic to pass through a direct tunnel which is virtually established with the Home Node B 111 of the radio communication device 110 installed in the user-owned network, so that the 3G terminal 190 is connected to the Internet via the user-owned network. That is, the 3G terminal 190 is connected to the Internet without passing its communication traffic via nodes of the carrier network. This reduces an amount of traffic simply passing through the carrier network, thus reducing facilities cost and operation cost in the carrier network. Additionally, the SGSN installed in the carrier network is able to carry out the authentication process of the 3G terminal by use of the secure tunnel established between the user-owned network and the carrier network, thus securing a high security.

### EMBODIMENT 2

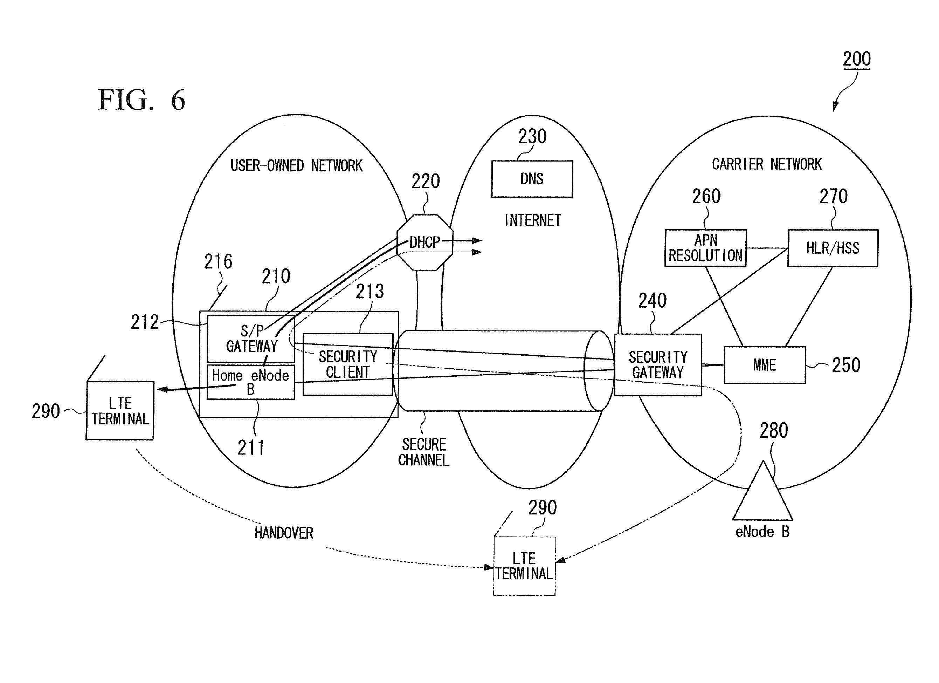

Fig. 6 shows the constitution and the outline operation with regard to a radio communication device and a mobile communication system 200 according to Embodiment 2.

The mobile communication system 200 connects an LTE (Long Term Evolution) terminal 290 to the Internet via a user-owned network. The user-owned network is an example of a mobile communication network. The LTE terminal 290 is an example of a mobile terminal. That is, the mobile communication system 200 connects the mobile terminal to the Internet via the mobile communication network. The mobile communication network 200 includes the radio communication device 210, a DHCP (Dynamic Host Configuration Protocol) 220, a DNS (Domain Name System) 230, a security gateway 240, an MME (Mobile Management Entity) 250, an APN (Access Point Name) resolution unit 260, an HLR/HSS (Home Location Resister/Home Subscriber Server) 270, and a plurality of eNode B 280.

A plurality of LET terminals 290 is connected to the mobile communication system 200 via the radio communication device 210 or via a plurality of eNode B 280. The LTE terminal 290 is connected to the Internet via the radio communication device 210. The radio communication device 210 of Embodiment 2 carries out a gateway process. The radio communication device 210 carries out path control on the LTE terminal 290. The radio communication device 210 is installed in the user-owned network. The radio communication device 210 is connected to the security gateway 240, installed in the carrier network, via a secure tunnel established via the Internet. Additionally, the radio communication device 210 is connected to the DHCP 220 via a LAN or the like. The DHCP 220 allocates necessary pieces of information, such as an IP address, to the LTE terminal 290 which is connected to the Internet. The DHCP 220 is installed in the user-owned network. For instance, the DHCP 220 is configured of an optical connection router in a home-use optical network service. The DNS 230 is installed in the Internet. The security gateway 240 is installed in the carrier network. The MME 250 is installed in the carrier network. The APN resolution unit 260 is installed in the carrier network. The HLR/HSS 270 is installed in the carrier network. The eNode B 280 is installed in the carrier network.

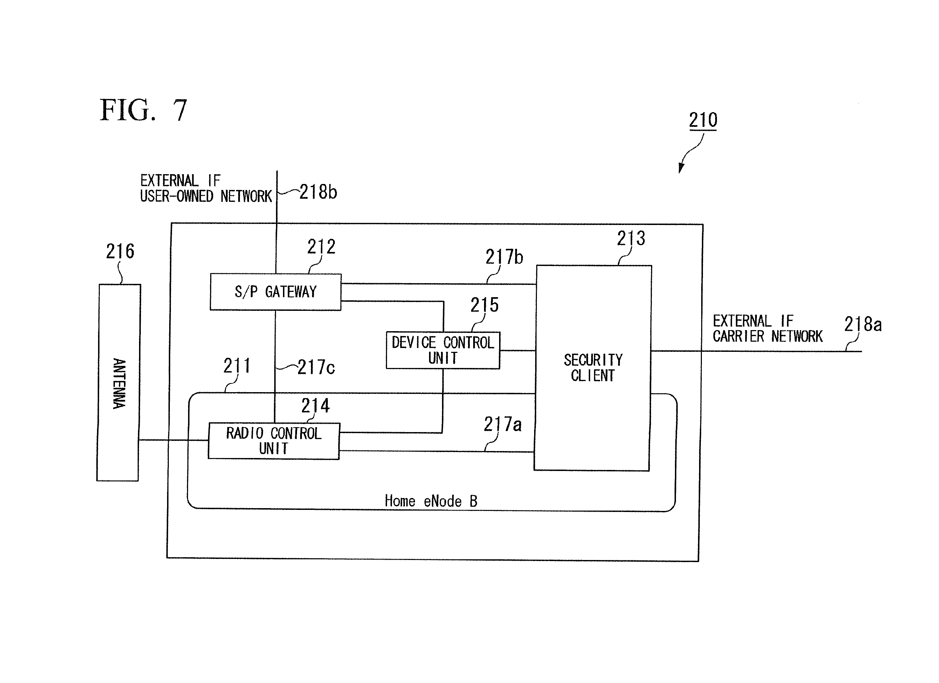

Fig. 7 is a block diagram showing the constitution of the radio communication device 210 of Embodiment 2.

The radio communication device 210 replays communication between the LTE terminal 290 and its destination, i.e. the Internet. The radio communication device 210 includes a Home eNode B 211, an S/P gateway 212, a security client 213, a radio control unit 214, a device control unit 215, and an antenna 216.

The S/P gateway 212 is equipped with an interface to the security client 213, an interface to the user-owned network, and an interface to the radio control unit 214. The radio control unit 214 is equipped with an interface to the security client 213 and an interface to the S/P gateway 212. The security client 213, which puts together the interfaces of the S/P gateway 212 and the radio communication unit 214, is equipped with an interface to the carrier network, which connects a secure tunnel to the carrier network via the user-owned network and the Internet. The device control unit 215 is a controller that controls the S/P gateway 212, the security client 213, and the radio control unit 214, so that the device control unit 215 stores setting parameters necessary for their operations.

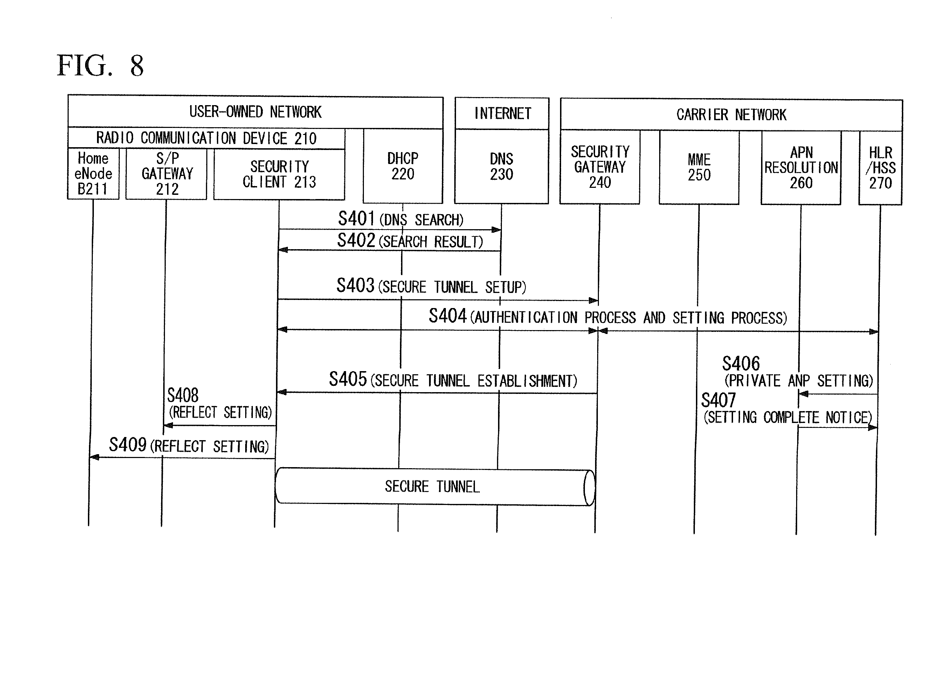

Fig. 8 shows an authentication process and a secure tunnel establishment process with regard to the mobile communication system 200 and the radio communication device 210 of Embodiment 2.

First, the security client 213 of the radio communication device 210 cooperates with the DNS 230 to search for the security gateway 240 in order to establish connection with the carrier network (steps S401, S402). Specifically, the radio communication device 210 stores a domain name of the security gateway 240 in memory (not shown), so that the radio communication device 210 inquires the DNS 230, installed in the Internet, about an IP address corresponding to the domain name. The DNS 230 has a correspondence table between domain names and IP addresses, so that the DNS 230 reads an IP address, corresponding to the inquired domain name from the correspondence table. Then, the DNS 230 transmits the read IP address to the radio communication device 210. The security client 213 of the radio communication device 210 receives the IP address transmitted from the DNS 230. Subsequently, the security client 230 starts the secure tunnel establishment process in accordance with the IKEv2 (Internet Key Exchange version 2).

The security client 213 and the HLR/HSS 270 carry out the authentication process based on the IKEv2 protocol (step S403). The security client 213 notifies the HLR/HSS 270 of identification information of the radio communication device 210. After completion of authentication, the HLR/HSS 270 notifies the security client 213 of setting information regarding a radio gateway. Upon confirming completion of authentication, the security gateway 240 notifies the security client 213 of completion of establishment of a secure tunnel (step S405).

The HLR/HSS 270 of the carrier network sets a specific APN to the APN resolution unit 260 in order to specify the user-owned network, equipped with the radio communication device 210, based on information notified by the security client 213 and to correlation the IP address to APN information (steps S406, S407). For instance, the APN information is a format such as Home<IMSI>, wherein <IMSI> denotes a subscriber identifier, i.e a numeral consisting of fifteen digits.

Then, the device control unit 215 of the radio communication device 210 reflects setting information, which the HLR/HSS 270 notifies to the security client 213, in setting the Home eNode B 211 and the S/P gateway 212 (steps S408, S409). The setting information may embrace location information, APN, SGSN addresses, or the like. Thus, a secure tunnel is established.

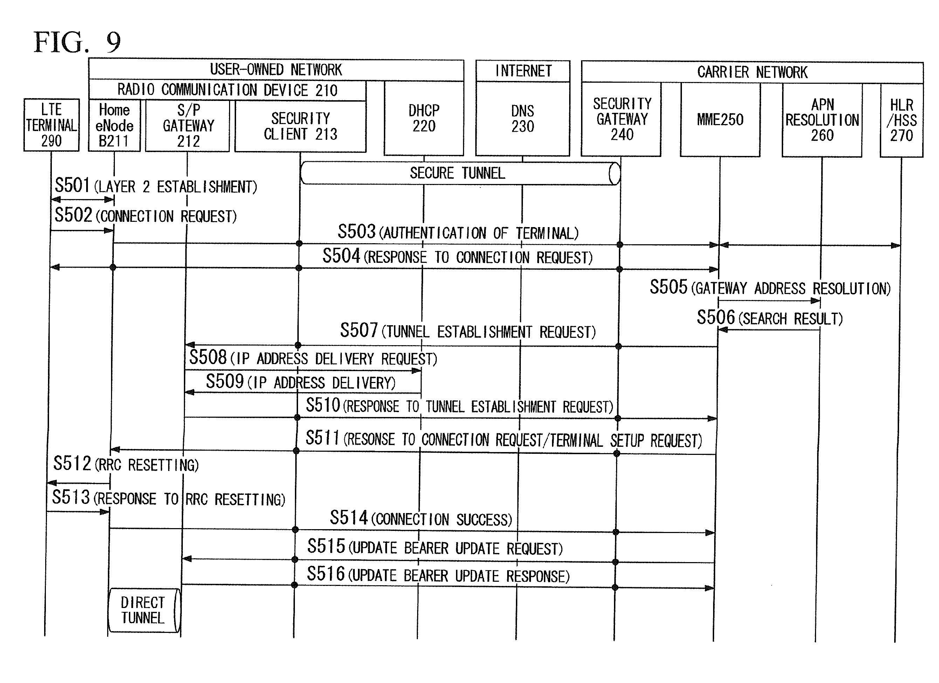

Fig. 9 shows a connection process of the LTE terminal 290 in the mobile communication system 200 of Embodiment 2.

First, the LTE terminal 290 establishes a radio link (Layer 2) with the Home eNode B 211 of the radio communication device 210 (step S501). Next, the LTE terminal 290 makes a connection request with the Home eNode B 211 (step S502). The Home eNode B 211 sends the connection request to the MME 250 (step S503). This starts an authentication process (step S504). Herein, the Home eNode B 211 sends connection destination information used for connection with the user-owned network, i.e. "Home*" using a wild card, to the MME 250.

The MME 250 prescribes a rule for converting Home* into Home<IMSI> for the purpose of APN resolution in advance, so that the MME 250 instructs the APN resolution unit 260 to search for a gateway corresponding to Home<IMSI> (step S505). The APN resolution unit 260 notifies the MME 250 of an IP address of a gateway corresponding to Home<IMSI> (step S506). Herein, the MME 250 notifies the S/P gateway 212 of a tunnel termination point, i.e. an IP address of the Home eNode B 211, thus accelerating adoption of a direct tunnel.

To establish a tunnel, the S/P gateway 212 inquires the DHCP 230 of the user-owned network about an IP address assigned to the LTE terminal 290 (step S508). The DHCP 230 delivers the IP address and notifies it to the S/P gateway 212 (step S509). When this setting is completed, the S/P gateway 212 notifies the MME 250 of a response to a tunnel establishment request (step S510). Next, the MME 250 makes a response to the connection request and a terminal setup request with the Home eNode B 211 (step S511).

Subsequently, the Home eNode B 211 requests the LTE terminal 290 to reset a control channel (RRC) (step S512). Upon resetting the control channel, the LTE terminal 290 sends back its result to the Home eNode B 211 (step S513). Next, the Home eNode B 211 notifies the MME 250 of completion of connection establishment (step S514).

Thereafter, the MME 250 requests the S/P gateway 212 to update a bearer (step S515). Upon updating the bearer, the S/P gateway 212 notifies the MME 250 of a response to a bearer update request (step S516). Thus, a direct tunnel is established, so that the LTE terminal 290 starts communication.

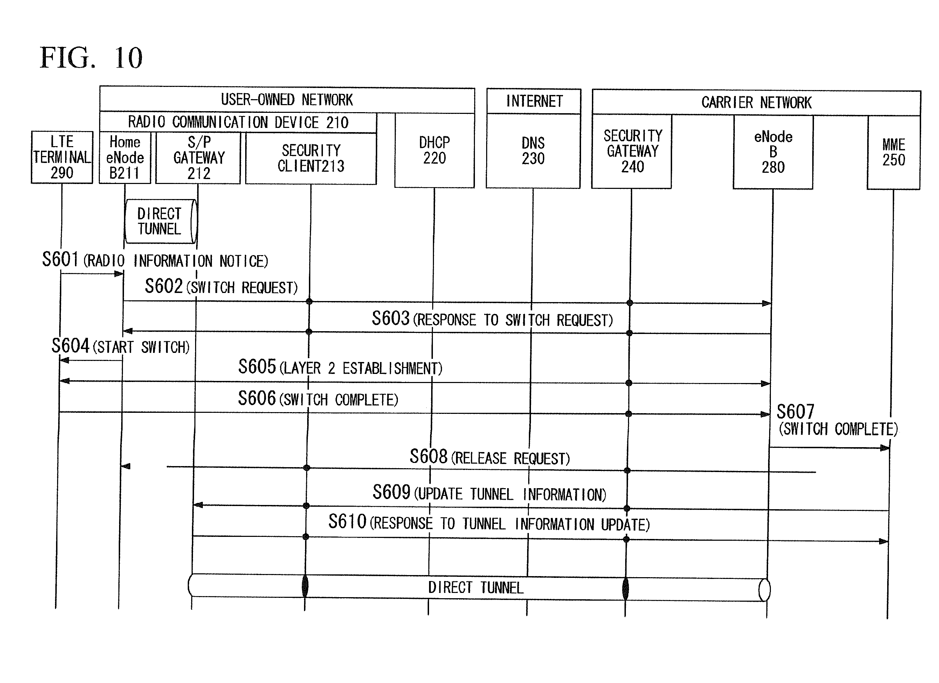

Fig. 10 shows a handover process from the user-owned network of the LTE terminal 290 to the public network in the mobile communication system 200 of Embodiment 2.

The handover process is carried out on the precondition that the radio communication device 210 has already established a direct tunnel between the S/P gateway 212 and the Home eNode B 211. First, the LTE terminal 290 sends radio information to the Home eNode B 211 (step S601). The radio control unit 214 sends a switch request to the eNode B 280, i.e. a communication destination (step S602). The eNode B 280, i.e. the communication destination, responds to the switch request (step S603).

Upon completion of preparation in the communication destination, the Home eNode B 211 of the radio communication device 210 sends a switch start command to the LTE terminal 290 (step S604). The LTE terminal 290 established a link of Layer 2 with the eNode B 280, i.e. the communication destination (step S605). This completes a switch of the destination with the LTE terminal 290 (step S606). The eNode B 280, i.e. the communication destination, notifies the MME 250 of the carrier network that a switch is completed (step S607). Additionally, the eNode B 280, i.e. the communication destination, sends a release request to the Home eNode B 211 of the radio communication device 210 (step S608).

Subsequently, the MME 250 requests the S/P gateway 212 to update tunnel information (step S609). The S/P gateway 212 updates tunnel information and then responds to the MME 250 (step S610). This completes a switch of the destination with the LTE terminal 290, so that a direct tunnel is established between the eNode B 280 and the S/P gateway 212.

As described above, when the LTE terminal 290 of the user-owned network is connected to the Internet in the mobile communication system 200 of Embodiment 2, the radio communication device 210 allows traffic of the LTE terminal 290 to pass through a direct tunnel virtually established between the Home Node B 211 and the S/P gateway 212, thus connecting the LTE terminal 290 to the Internet via the user-owned network. Thus, the LTE terminal 290 is connected to the Internet without transmitting its communication traffic via nodes of the carrier network. Therefore, it is possible to reduce traffic simply passing through the carrier network. Additionally, it is possible to reduce facilities cost and operation cost of the carrier network. Furthermore, it is possible to secure a high security because the MME installed in the carrier network carries out the authentication process of the LTE terminal by way of the secure tunnel established between the user-owned network and the carrier network.

The present invention is not necessarily limited to the foregoing embodiments, which can be further modified in various ways within the scope of the appended claims.

In the embodiments, for example, the Home Node B is replaceable with a commonly-known radio communication device or radio communication unit (e.g. a single unit of RNC (a radio network control device) or a BSC (a base station control device)). In the embodiments, the Home Node B (or a radio control unit) and the GGSN coexists in the same device (i.e. the radio communication device 110); but they can be separately arranged in separate devices. Similarly, the Home Node B (or a radio control unit) and the S/P gateway do not necessarily coexist in the same device; hence, they can be separated from each other. Furthermore, it is possible to arrange a single unit of an S gateway or a single unit of a P gateway instead of the S/P gateway. For instance, it is possible to replace the S/P gateway with a single unit of a P gateway.

### INDUSTRIAL APPLICABILITY

The present invention is applicable to a mobile communication system including a radio communication device adopting Home Node B. In particular, the present invention aims to reduce traffic simply passing through the carrier network by establishing a secure tunnel when the user-owned network of the mobile terminal is radio-linked to the carrier network, which is connected to a plurality of base stations and other mobile terminals, via the Internet.

### DESCRIPTION OF THE REFERENCE NUMERALS

- 100: Mobile Communication System
- 110: Radio Communication device
- 111: Home Node B
- 112: GGSN
- 113: Security client
- 114: Radio control unit
- 115: Device control unit
- 116: Antenna
- 120: DHCP
- 130: DNS
- 140: Security gateway
- 150: SGSN
- 160: APN resolution unit
- 170: HLR/HSS
- 180: RNC
- 190: 3 G terminal
- 200: Mobile communication system
- 210: Radio communication device
- 211: Home eNode B
- 212: S/P gateway
- 213: Security client
- 214: Radio control unit
- 215: Device control unit
- 216: Antenna
- 220: DHCP
- 230: DNS
- 240: Security gateway
- 250: MME
- 260: APN resolution unit
- 270: HLR/HSS
- 280: eNode B
- 290: LTE terminal

A first aspect of the invention relates to a mobile communication system for connecting a mobile terminal to a network, comprising:
the mobile terminal;
a Home Node B that carries out communication with the mobile terminal;
a gateway that relays a communication from the mobile terminal to the network; and
a node that keeps track of the location of the mobile terminal,
wherein the node establishes a direct tunnel between the gateway and the Home Node B, so that the mobile terminal is connected to the network via the direct tunnel without going through the node.

A second aspect of the invention relates to the mobile communication system according to the first aspect, wherein the gateway and the Home Node B are installed in the same apparatus.

A third aspect of the invention relates to the mobile communication system according to the first aspect, wherein the gateway is positioned adjacent to the Home Node B.

A fourth aspect of the invention relates to the mobile communication system according to any one of the first to third aspects, wherein the gateway is a GGSN.

A fifth aspect of the invention relates to the mobile communication system according to any one of the first to fourth aspects, wherein the node is an SGSN.

A sixth aspect of the invention relates to the mobile communication system according to any one of the first to fifth aspects, wherein the Home Node B includes an RNC.

A seventh aspect of the invention relates to the mobile communication system according to any one of the first to sixth aspects, wherein the network is a network using IP addresses.

An eighth aspect of the invention relates to a radio communication method for connecting a mobile terminal to a network, comprising:
implementing a node to keep track of the location of the mobile terminal;
implementing the node to establish a direct tunnel between a Home Node B, which communicates with the mobile terminal, and a gateway which relays communication to the network; and
connecting the mobile terminal to the network via the direct tunnel without going through the node.

A ninth aspect of the invention relates to a gateway for connecting a mobile terminal to a network, comprising:
a first interface for a Home Node B that communicates with the mobile terminal; and
a second interface for the network,
wherein a direct tunnel is established between the gateway and the Home Node B by way of a node which keeps track of the location of the mobile terminal, so that the mobile terminal is connected to the network via the direct tunnel without going through the node.

A tenth aspect of the invention relates to the gateway according to the ninth aspect, wherein the gateway and the Home Node B are installed in the same apparatus.

An eleventh aspect of the invention relates to the gateway according to the ninth aspect, wherein the gateway is positioned adjacent to the Home Node B.

A twelfth aspect of the invention relates to the gateway according to any one of the ninth to eleventh aspect, wherein the gateway is a GGSN.

A thirteenth aspect of the invention relates to a Home Node B connectible to a mobile terminal, comprising:
a radio control unit that is wirelessly connected to the mobile terminal; and
an interface for a gateway which relays communication from the mobile terminal to the network,
wherein a direct tunnel is established between the Home Node B and the gateway by use of the interface with a node which keeps track of the location of the mobile terminal, so that the mobile terminal is connected to the network via the direct tunnel without going through the node.

A fourteenth aspect of the invention relates to the Home Node B according to the thirteenth aspect, wherein the Home Node B and the gateway are installed in the same apparatus.

A fifteenth aspect of the invention relates to the Home Node B according to the thirteenth aspect, wherein the Home Node B is positioned adjacent to the Home Node B.

## Claims

1. A mobile communication system for connecting a mobile terminal (290) to a first network, the system comprising:
the mobile terminal;
a Home eNode B (211) adapted to connect to the mobile terminal;
a gateway (212) adapted to connect to the first network; and
a Mobility Management Entity, MME, (250),
wherein
the gateway is co-located with the Home eNode B in a communication device (210),
the communication device is adapted to establish a secure tunnel with a security gateway (240);
the MME is adapted to authenticate the mobile terminal; and
the mobile terminal is adapted to connect to the first network via the Home eNode B and the co-located gateway.

2. The mobile communication system according to claim 1, wherein
the co-located gateway is adapted to establish a direct tunnel with the Home eNode B; and
the mobile terminal is adapted to connect to the first network via the direct tunnel.

3. The mobile communication system according claim 1 or 2, wherein
the Home eNode B and the co-located gateway are installed in a second network;
the MME is installed in a third network; and
the mobile terminal is adapted to connect the first network via the second network without going through the third network.

4. A communication method of connecting a mobile terminal (290) to a first network, wherein
a communication device (210) comprising a gateway (212) and a Home eNode B (211) co-located with each other establishes a secure tunnel with a security gateway (240);
a Mobility Management Entity, MME, (250) authenticates the mobile terminal; and
the mobile terminal connects to the first network via the Home eNode B and the co-located gateway.

5. The communication method according to claim 4, wherein
the co-located gateway establishes a direct tunnel with the Home eNode B; and
the mobile terminal connects to the first network via the direct tunnel.

6. The communication method according to claim 4 or 5, wherein
the Home eNode B and the co-located gateway are installed in a second network;
the MME is installed in a third network; and
the mobile terminal connects to the first network via the second network without going through the third network.

7. A communication device (210) used in a mobile communication system for connecting a mobile terminal (290) to a first network, the device comprising:
a Home eNode B (211) adapted to connect to the mobile terminal; and
a gateway (212) adapted to connect to the first network,
wherein
the communication device is adapted to establish a secure tunnel with a security gateway (240); and
the communication device is adapted to forward a communication from the mobile terminal to the first network after the mobile terminal is authenticated by a Mobility Management Entity, MME, (250).

8. The communication device according to claim 7, wherein
the gateway is adapted to establish a direct tunnel with the Home eNode B; and
the mobile terminal is adapted to connect to the first network via the direct tunnel.

9. The communication device according to claim 8 or 9, wherein
the communication device is installed in a second network;
the MME is installed in a third network; and
the mobile terminal is adapted to connect to the first network via the second network without going through the third network.
